# FASCICULE DE BREVET EUROPEEN

(11) **EP 0 887 246 B1**
(45) Date de publication et mention de la délivrance du brevet: **19.10.2005**
(21) Numéro de dépôt: 98401506.5
(22) Date de dépôt: 19.06.1998
(51) Int. Cl.: B62D 21/11, B60G 25/00

(54) **Agencement pour la suspension du berceau d'un train avant d'automobile**
Anordnung für die Aufhängung eines Vorderfahrgestellträgers eines Kraftfahrzeuges
Arrangement for the suspension of a motor vehicle front axle support

(30) Priorité: 27.06.1997 FR 9708091
(43) Date de publication de la demande: 30.12.1998
(73) Titulaire: Renault s.a.s., 92100 Boulogne Billancourt (FR)
(72) Inventeur: Faudou, Jean-Philippe, 92500 Rueil Malmaison (FR); Juhe, Philippe, 78300 Poissy (FR)

(56) Documents cités:
- DE-A- 2 462 036
- DE-A- 2 536 060
- FR-A- 951 846
- FR-A- 2 079 449
- FR-A- 2 392 839
- FR-A- 2 459 751
- US-A- 2 171 947
- US-A- 3 105 717
- US-A- 5 193 643

## Description

La présente invention concerne un agencement d'une suspension d'un berceau de train sur un élément de structure d'un véhicule automobile.

Selon une conception généralement connue, les liaisons articulées d'un train avant de suspension sont supportées par un berceau fixé à la structure du véhicule par des vis montées verticalement. Un bloc filtrant en matériau élastomère monté coaxialement à chaque vis est interposé entre le berceau et la structure du véhicule.

Le document US 2171947 présente un dispositif de montage de caisse sur un châssis automobile, introduisant un support élastique positionné entre le berceau et la caisse du véhicule.

Il existe des dispersions dimensionnelles de fabrication entre, d'une part, la distance séparant les points du berceau auxquels sont agencés les supports du berceau et, d'autre part, entre les points de liaisons correspondants réalisés dans la structure de la caisse.

On constate que si ces dispersions sont trop importantes, il apparaît des cas dans lequel le berceau ne peut pas se centrer librement, selon la direction transversale, au niveau du tampon élastique interposé entre la biellette et la structure du véhicule.

La présente invention vise à rendre aisément et substantiellement automatisable la fixation d'un berceau support d'éléments de train.

Ainsi la conception du moyen de retenue de la tête de biellette permet d'une part sa réception quel que soit un éventuel défaut de positionnement initial, d'autre part, et par la suite, une venue de la tête de biellette en position définitive rigoureuse qui correspond à la position d'alignement correct avec un orifice de passage d'une vis de fixation de la tête de la biellette, si bien que la mise en place des vis ou boulons de fixation s'en trouve considérablement facilité, et aisément automatisable.

Dans ce but, l'invention propose un agencement d'une suspension d'un berceau de train avant d'automobile disposé transversalement au véhicule, du type comportant un premier support élastique interposé entre une extrémité du berceau et la structure de la caisse du véhicule, caractérisé en ce que le premier support élastique est relié à la structure de la caisse du véhicule avec interposition d'un élément de liaison s'étendant dans un plan sensiblement vertical, et en ce que l'extrémité supérieure de l'élément de liaison est reliée à la structure de la caisse par l'indexage d'un deuxième support élastique dans un moyen de retenue solidarisé à la structure de caisse.

Selon une autre caractéristique de la présente invention, l'élément de liaison est de forme sensiblement en L dont la base est reliée au berceau.

Selon une autre caractéristique de la présente invention, le support élastique supérieur comprend deux armatures tubulaires concentriques, une armature interne et une armature externe entre lesquelles est adhérisée une masse en élastomère.

Selon une autre caractéristique de la présente invention, l'armature interne du support élastique supérieur porte une embase qui vient coopérer avec un moyen de retenue fixé sur l'élément de structure.

Selon une autre caractéristique de la présente invention, l'armature interne du support élastique supérieur comporte un collet radial central sur la surface périphérique externe duquel est adhérisé une douille élastomère et se prolonge axialement par deux portées cylindriques.

Selon une autre caractéristique de la présente invention, l'élément de liaison est relié à un longeron de la structure du véhicule.

D'autres caractéristiques et avantages de l'invention apparaîtront à la lecture de la description détaillée qui va suivre, pour la compréhension de laquelle on se reportera aux dessins annexés, dans lesquels :
- la figure 1 est une vue en perspective éclatée d'un dispositif de fixation de l'extrémité d'un élément de liaison sur un longeron selon un premier mode de réalisation de l'invention.
- la figure 2 est une vue en coupe suivant le plan longitudinal médian de la biellette de l'agencement de montage de la figure 1, représenté assemblé.
- la figure 3 est une vue en perspective éclatée d'un dispositif de fixation de l'extrémité d'un élément de liaison sur un longeron selon un second mode de réalisation de l'invention.
- la figure 4 est une vue en coupe suivant le plan longitudinal médian de la biellette de l'agencement de montage de la figure 3, représenté assemblé.
- la figure 5 est une vue en perspective éclatée d'un dispositif de fixation de l'extrémité d'un élément de liaison sur un longeron selon un troisième mode de réalisation de l'invention.
- la figure 6 est une vue en coupe suivant le plan longitudinal médian de la biellette de l'agencement de montage de la figure 5, représenté assemblé.

En se reportant aux différentes figures, la référence 7 désigne une biellette de liaison d'un élément de structure, tel qu'un longeron 4, avec un élément non suspendu du véhicule, par exemple un berceau constitué par un ensemble rigide sur lequel sont articulés l'ensemble des liaisons du train de suspension.

La biellette 7 est solidarisée par ses extrémités supérieure et inférieure respectivement au longeron 4 et au berceau par des articulations élastiques de filtrage 1 et 71.

La biellette présente une conformation générale en L ; la biellette est constituée soit d'un assemblage mécano-soudé comprenant une partie centrale aux extrémités de laquelle sont soudés deux éléments tubulaires, de telle sorte que leurs axes respectifs s'étendent dans des directions sensiblement perpendiculaires.

Selon un autre mode de réalisation, la biellette est réalisée par emboutissage et comporte deux orifices traversants au niveau de ses extrémités ; chacun des orifices se prolonge par une couronne venue d'emboutissage qui fait saillie axialement à partir de la périphérie de chacun des orifices.

L'articulation inférieure 71 est montée verticalement et fixée par exemple par un ensemble boulonné sur le berceau.

A l'autre extrémité de la biellette 7, l'articulation supérieure 1 est reliée au longeron par le boulon 2. l'articulation 1 est constituée de deux armatures tubulaires concentriques, une armature interne et une armature externe 42 entre lesquelles est adhérisée une masse en élastomère 114. L'armature externe et le manchon s'étendent sur une même longueur inférieure à la longueur de l'armature interne.

L'articulation élastique supérieure 1 permet de rattraper les dispersions dimensionnelles entre, d'une part, la distance séparant les points du berceau auxquels sont agencés les supports du berceau et, d'autre part, entre les points de liaisons correspondants réalisés dans la structure de la caisse.

L'articulation élastique inférieure 71 permet de compenser les dispersions d'alignement et d'angularité entre le boulon et l'écrou.

L'armature externe 111 est emmanchée dans l'orifice situé au niveau de l'extrémité supérieure de la biellette 7.

L'armature interne 110 comporte un alésage dont la partie centrale de section circulaire qui débouche, d'une part, dans un alésage coaxial de plus grand diamètre et, d'autre part, dans un alésage tronconique.

L'armature interne se prolonge par une embase 112 percée d'un trou disposé en regard de l'ouverture tronconique de l'alésage axial.

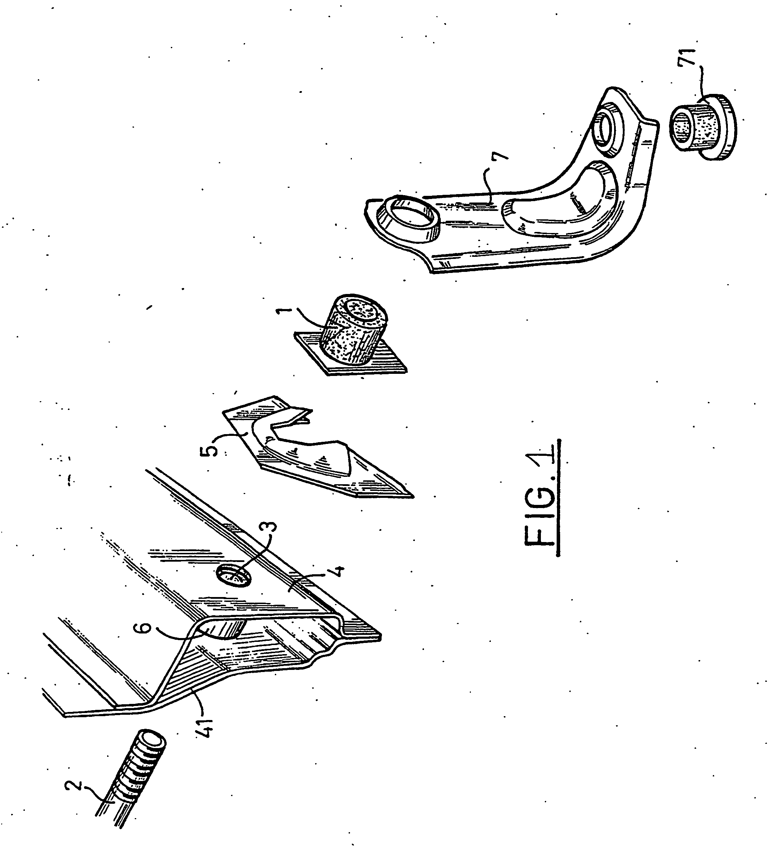

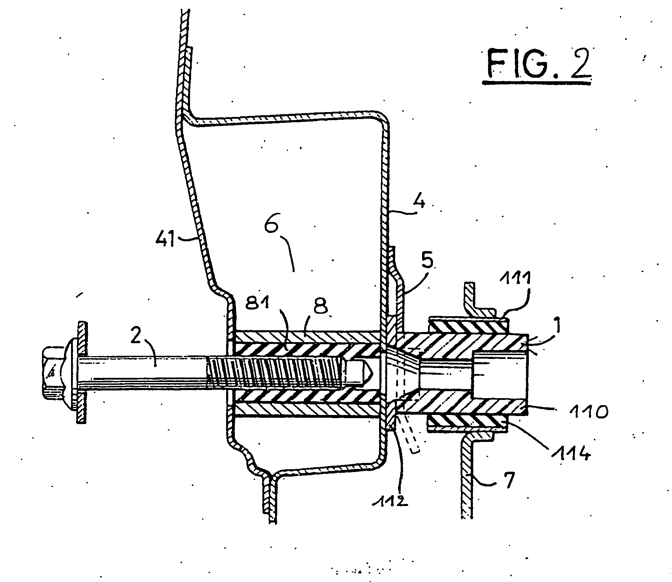

Selon le premier mode de réalisation de l'invention sur les figures 1 et 2, l'embase est constituée par un élément plan solidaire de l'armature interne et vient se loger dans un évidement d'un moyen de retenue 5 formant butée d'arrêt de la biellette, lors du montage automatisé de l'extrémité supérieure de la biellette sur le longeron.

Cette butée 5 comprend une partie centrale bombée et de deux pattes qui s'étendent de part et d'autre de la partie bombée faisant saillie à l'opposé de la surface du longeron.

La partie bombée de la butée est aménagée en fourche d'emboîtement élastique qui se monte et se démonte respectivement par emboîtement et désemboîtement à force par déformation élastique sur l'armature interne de l'articulation supérieure 1.

Cette fourche élastique comprend un évidement ménagé dans la partie bombée, et de forme circulaire et s'étendant sur un arc de cercle légèrement supérieur à un demi-cercle d'un rayon correspondant à celui de l'armature, et cet évidement s'ouvre ainsi vers l'extrémité inférieure de la partie bombée par une ouverture resserrée, dont chacun des deux bords se prolonge vers l'extrémité inférieure de la partie bombée par l'une respectivement des deux pattes, s'étendant sensiblement parallèlement l'une à l'autre, et dont les faces en regard l'une de l'autre sont inclinées l'une vers l'autre et vers les bords de l'ouverture resserrée de l'évidement, de façon à former un chanfrein d'entrée et de sortie pour l'ouverture resserrée et l'évidement.

L'évidement et son ouverture resserrée forment ainsi un logement pour recevoir l'armature interne. Cette butée 5 est avantageusement réalisée par estampage.

Le longeron 6 comporte deux coques soudées entre elles ; une entretoise 8 constituée d'un élément tubulaire à l'intérieur duquel est emmanché coaxialement une douille plastique 81 est montée entre les surfaces internes des deux parties du longeron 6 coaxialement à un axe définit par les centres de deux trous en regard l'un de l'autre et percés sur les faces opposées des deux coques 4 et 41 du longeron 6.

L'assemblage de la biellette 7 sur le longeron 6 s'effectue de la manière suivante.

On positionne tout d'abord l'embase de l'armature interne de telle sorte qu'elle vienne s'appuyer sur la surface extérieure du longeron 6. Afin de faciliter l'introduction de l'embase 112 dans le logement de la butée 5, les extrémités des pattes sont pliées de façon à faire légèrement saillie vers l'extérieur de la butée, ce qui permet de guider l'armature lors de son introduction dans le logement.

Puis, par poussée verticale exercée sur la biellette, on provoque l'écartement élastique à force des pattes, pour élargir l'ouverture resserrée au passage de l'armature interne au niveau de cette ouverture, puis l'armature interne se loge dans l'évidement, les pattes se rapprochent l'une de l'autre pour reformer l'ouverture resserrée, ce qui bloque ainsi l'armature dans l'évidement par emboîtement élastique.

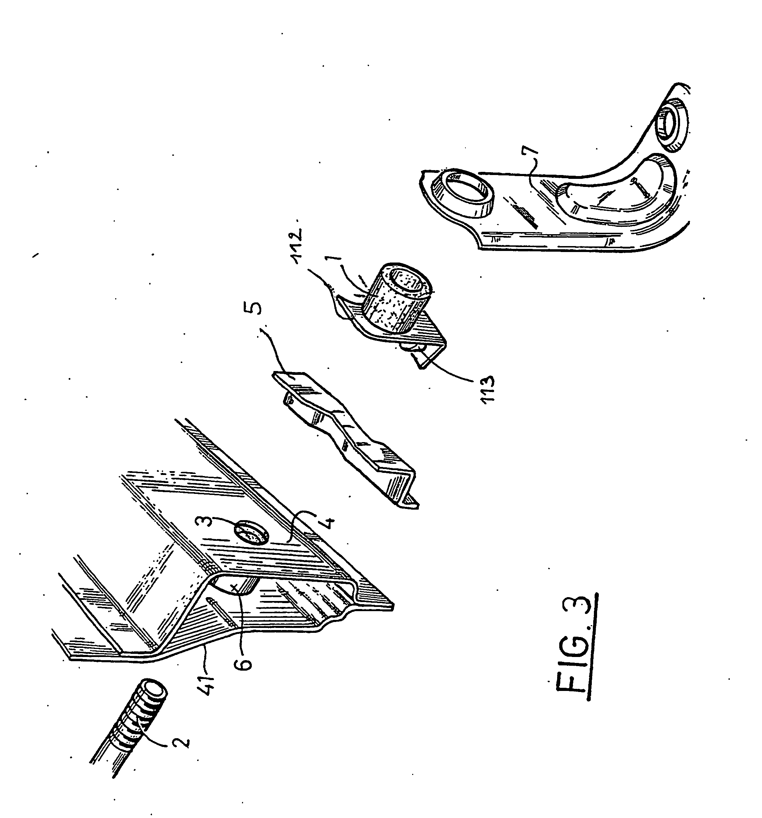

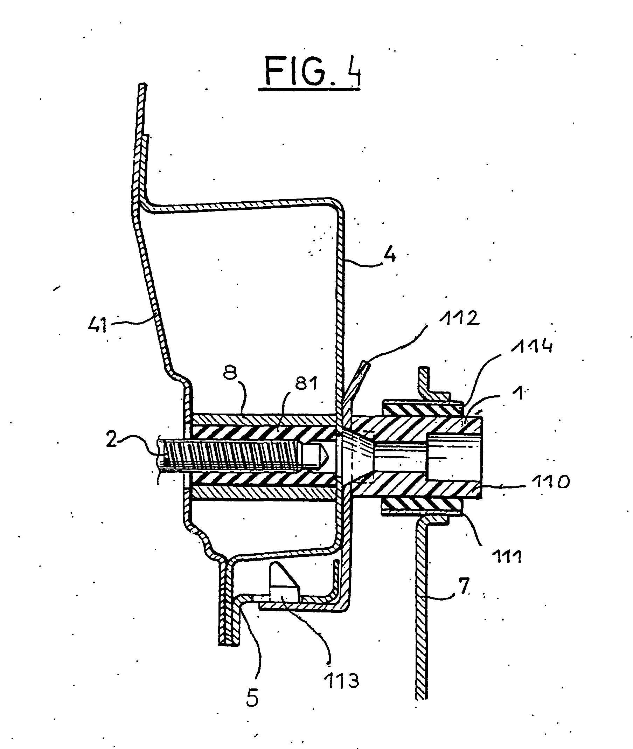

Selon le second mode de réalisation de l'invention représenté sur les figures 3 et 4, l'embase présente, vue de côté une forme en L inversée, et est constituée d'une âme verticale en configuration d'utilisation, dont l'extrémité inférieure comporte une aile, également plane et sensiblement perpendiculaire à l'âme. L'extrémité supérieure de l'âme est légèrement pliée de façon à faire saillie vers l'extérieur du plan de l'âme pour faciliter le positionnement de l'embase sur le longeron. La surface extérieure de l'aile porte un ergot 113 qui s'étend verticalement et vient se loger dans un orifice d'axe vertical percé sur un moyen de retenue 5 fixé sur le longeron, formant support de l'élément 1.

Ce support 5 est constitué d'un partie centrale plane de forme sensiblement parallépipédique qui se prolonge à partir de ses grands côtés par des ailes s'étendant respectivement de part et d'autre du plan de l'élément central et perpendiculairement à ce dernier.

La partie centrale est percée d'un orifice central de réception d'un ergot de montage de l'embase. Le support est soudé sur une surface de forme complémentaire du longeron ; à cet effet la coque du longeron adjacente au support présente par exemple une forme en U.

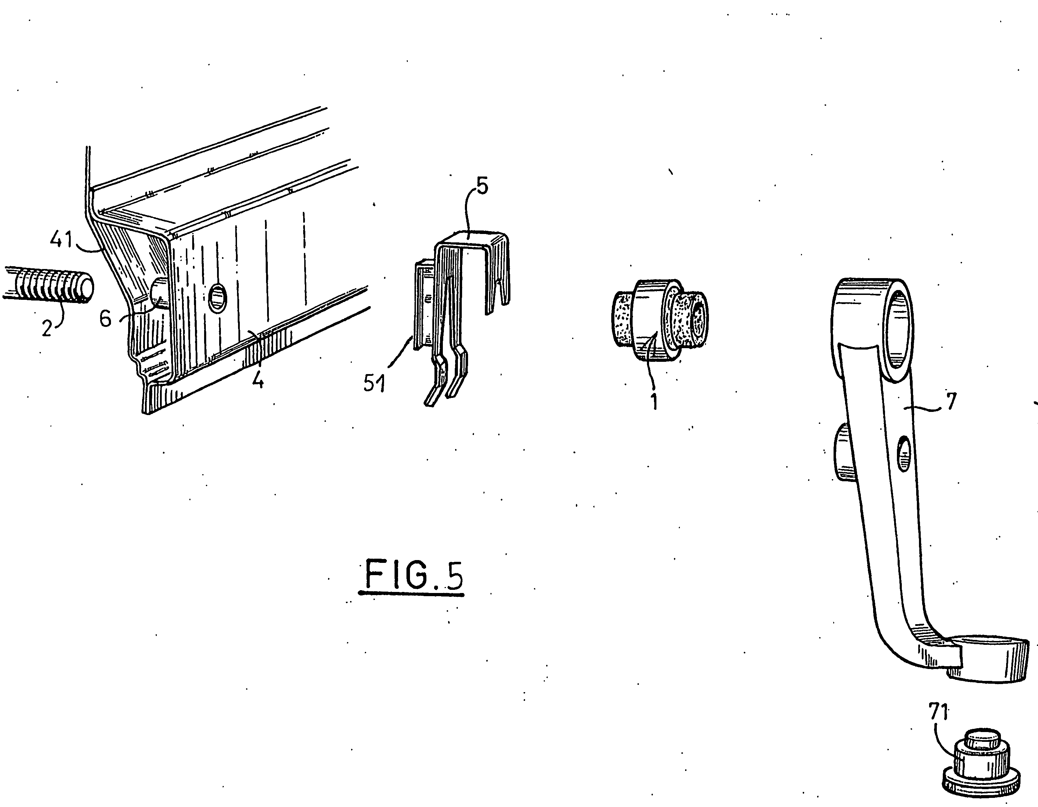

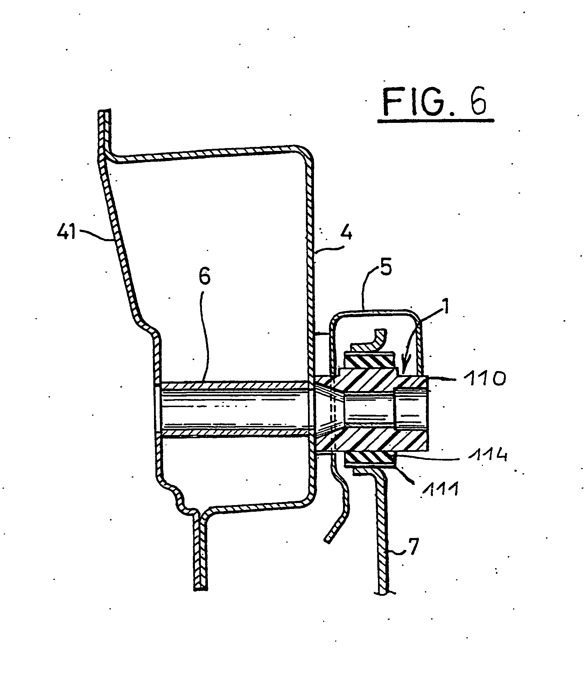

Selon un troisième mode de réalisation de l'invention représenté sur les figures 5 et 6, l'armature interne de la première articulation comporte un collet radial central sur la surface périphérique externe duquel est adhérisé une douille élastomère et se prolonge axialement par deux portées cylindriques.

Cette armature coopère avec une butée présentant, vue de côté une forme en U renversé ; les branches parallèles du U étant d'inégale longueur.

Le moyen de retenue 5 formant butée est relié au longeron par une entretoise 51 ; l'entretoise est fixée sur le longeron préalablement au montage de la biellette.

Chacune des branches parallèles du U comporte un évidement du même type que celui décrit dans le premier mode de réalisation, et dans lesquels viennent se loger respectivement les portées situées de part et d'autre du collet radial.

L'extrémité de la branche la plus longue du U, adjacente à la surface du longeron, présente une section concave tournant sa concavité vers l'intérieur du U, obtenue en pliant l'extrémité vers l'intérieur du U dans une direction faisant un angle d'environ 45° avec le plan de la branche, puis en rabattant une partie de cette extrémité dans un plan parallèle au plan de la branche, et enfin en pliant l'extrémité de cette partie parallèle à nouveau vers l'extérieur du U dans une direction faisant un angle sensiblement égal à 45°. Une telle extrémité sert à la fois de moyen de guidage et de centrage de l'extrémité de la biellette lors de son montage.

Une fois la biellette correctement positionnée, on opère la mise en place de la tige filetée du boulon 7 dans le canal axial de la douille plastique 81 de l'entretoise 8, puis on procède au serrage de l'écrou.

Un tel agencement permet des opérations de montage automatisé et améliore la productivité des lignes de production.

Bien entendu, l'invention n'est nullement limitée au mode de réalisation décrit et illustré qui n'a été donné qu'à titre d'exemple.

## Revendications

1. Agencement d'une suspension d'un berceau de train avant d'automobile disposé transversalement au véhicule, du type comportant un premier support élastique (71) interposé entre une extrémité du berceau et la structure (4) de la caisse du véhicule, **caractérisé en ce que** le premier support élastique (71) est relié à la structure de la caisse du véhicule avec interposition d'un élément de liaison (7) s'étendant dans un plan sensiblement vertical, et **en ce que** l'extrémité supérieure de l'élément de liaison (7) est reliée à la structure de la caisse par l'indexage d'un deuxième support élastique (1) dans un moyen de retenue (5) solidarisé à la structure de caisse.

2. Agencement selon la revendication 1, **caractérisé en ce que** l'élément de liaison (7) est de forme sensiblement en L dont la base est reliée au berceau.

3. Agencement selon les revendications 1 et 2, **caractérisé en ce que** la support élastique supérieur (1) comprend deux armatures tubulaires concentriques, une armature interne (110) et une armature externe (111) entre lesquelles est adhérisée une masse en élastomère 114.

4. Agencement selon la revendication 3, **caractérisé en ce que** l'armature interne 110 du support élastique supérieur 1 porte une embase (112) qui vient coopérer avec le moyen de retenue (5) fixé sur l'élément de structure (4).

5. Agencement selon la revendication 3, **caractérisé en ce que** l'armature interne du support élastique supérieur (1) comporte un collet radial central sur la surface périphérique externe duquel est adhérisé une douille élastomère 114 et se prolonge axialement par deux portées cylindriques.

6. Agencement selon l'une quelconque des revendications précédentes, **caractérisé en ce que** l'élément de liaison (7) est relié à un longeron de la structure du véhicule.

## Patentansprüche

1. Anordnung einer Aufhängung eines quer zum Fahrzeug angeordneten Vorderfahrgestellträgers eines Kraftfahrzeuges, von einer solchen Art, die eine erste elastische Stütze (71) umfasst, die zwischen einem Ende des Trägers und der Struktur (4) des Fahrzeugkastens angeordnet ist, **dadurch gekennzeichnet, dass** die erste elastische Stütze (71) mit der Struktur des Fahrzeugkastens unter Zwischensetzung eines Verbindungselementes (7), welches sich in einer im Wesentlichen senkrechten Ebene erstreckt, verbunden ist, und **dadurch**, dass das obere Ende des Verbindungselements (7) mit der Struktur des Kastens durch die Positionierung einer zweiten elastischen Stütze (1) in einem mit der Struktur des Kastens verbundenen Haltemittel (5) verbunden ist.

2. Anordnung nach Anspruch 1, **dadurch gekennzeichnet, dass** das Verbindungselement (7) im Wesentlichen aus einer L-Form besteht, deren Basis mit dem Träger verbunden ist.

3. Anordnung nach den Ansprüchen 1 und 2, **dadurch gekennzeichnet, dass** die obere elastische Stütze (1) zwei konzentrische rohrförmige Mäntel aufweist, einen inneren Mantel (110) und einen äußeren Mantel (111), zwischen welchen eine Elastomermasse (114) geklebt ist.

4. Anordnung nach Anspruch 3, **dadurch gekennzeichnet, dass** der innere Mantel (110) der oberen elastischen Stütze (1) einen Sockel (112) trägt, der mit dem auf dem Strukturelement (4) befestigten Haltemittel (5) zusammenwirkt.

5. Anordnung nach Anspruch 3, **dadurch gekennzeichnet, dass** der innere Mantel der oberen elastischen Stütze (1) einen zentralen radialen Kragen umfasst, wobei auf dessen externe Außenfläche eine Elastomerhülse (114) geklebt ist, und durch zwei zylindrische Auflageflächen axial verlängert wird.

6. Anordnung nach einem der vorhergehenden Ansprüche, **dadurch gekennzeichnet, dass** das Verbindungselement (7) mit einem Längsträger der Fahrzeugstruktur verbunden ist.

## Claims

1. An arrangement of a suspension of a front axle cradle of an automobile vehicle disposed transversely to the vehicle, of the type comprising a first resilient support (71) interposed between an end of the cradle and the vehicle bodywork structure (4), **characterised in that** this first resilient support (71) is connected to the bodywork structure of the vehicle with the interposition of a connecting member (7) extending in a substantially vertical plane, and **in that** the upper end of the connecting member (7) is connected to the bodywork structure by the indexing of a second resilient support (1) in a retaining means (5) made rigid with the bodywork structure.

2. An arrangement as claimed in claim 1, **characterised in that** the connecting member (7) is substantially L-shaped and its base is connected to the cradle.

3. An arrangement as claimed in claims 1 and 2, **characterised in that** the upper resilient support (1) comprises two concentric tubular reinforcements, i.e. an inner (110) and an outer (111) reinforcement, between which an elastomer mass (114) is secured by adhesion.

4. An arrangement as claimed in claim 3, **characterised in that** the inner reinforcement (110) of the upper resilient support (1) comprises a base (112) which cooperates with a retaining means (5) secured on the bodywork member (4).

5. An arrangement as claimed in claim 3, **characterised in that** the inner reinforcement of the upper resilient support (1) comprises a central radial collar on the outer peripheral surface of which an elastomer bushing (114) is secured by adhesion and is axially prolonged by two cylindrical bearings.

6. An arrangement as claimed in any one of the preceding claims, **characterised in that** the connecting member (7) is connected to a side member of the vehicle bodywork.
